# EUROPÄISCHE PATENTSCHRIFT

(11) **EP 1 250 389 B1**
(45) Veröffentlichungstag und Bekanntmachung des Hinweises auf die Patenterteilung: **16.02.2005**
(21) Anmeldenummer: 01901183.2
(22) Anmeldetag: 22.01.2001
(51) Int. Cl.: C09D 127/12, C09D 109/04, C09D 109/02, C09D 1/00

(54) **WÄSSRIGE ELASTOMERBESCHICHTUNGSKOMPOSITION UND DAMIT BESCHICHTETE GEGENSTÄNDE**
AQUEOUS ELASTOMER COATING COMPOSITION AND OBJECTS COATED WITH THE SAME
COMPOSITION AQUEUSE DE REVETEMENT ELASTOMERE ET OBJETS ENDUITS AVEC CETTE COMPOSITION

(30) Priorität: 27.01.2000 DE 10003578
(43) Veröffentlichungstag der Anmeldung: 23.10.2002
(73) Patentinhaber: Carl Freudenberg KG, 69469 Weinheim (DE)
(72) Erfinder: OSEN, Ernst, 69488 Birkenau (DE); ZUBER, Richard, 69517 Gorxheimertal (DE); SCHAUPP, Jörg, 76139 Karlsruhe (DE); URBANSKI, Volker, 64668 Rimbach (DE); RINK, Stefan, 64405 Fischbachtal (DE); HENKE, Jürgen, 68519 Viernheim (DE)
(74) Vertreter: Ripper, Monika Sigrid, Dr.
(86) Internationale Anmeldenummer: PCT/EP2001/000635
(87) Internationale Veröffentlichungsnummer: WO 2001/055266

(56) Entgegenhaltungen:
- EP-A- 0 326 394
- EP-A- 0 778 327
- EP-A- 0 838 482
- DE-A- 19 622 188
- GB-A- 2 253 401

## Beschreibung

Die Erfindung betrifft eine wäßrige Elastomerbeschichtungskomposition. Weiterhin betrifft die Erfindung Gegenstände die mit dieser Elastomerbeschichtungskomposition beschichtet worden sind.

Dichtungen kommen in fast allen technischen Anwendungen zum Einsatz. Man trennt dabei in zwei prinzipielle Bereiche, das heißt in statische und dynamische Dichtungen. Jedoch unterliegen auch statische Dichtungen dynamischen Prozessen wie thermischen Wechselbelastungen oder äußeren dynamischen Kräften. Durch die ständig wachsenden Anforderungen an technische Systeme, wie zum Beispiel in Verbrennungsmotoren, muß auch das Leistungspotential der Dichtungen steigen. So müssen Dichtungen beim Einsatz im Automobilbau, zum Beispiel als Nebenaggregatdichtung oder als Zylinderkopfdichtung heute einen größeren Temperaturbereich abdecken und auch gegenüber synthetischen, meist aggressiven Ölen und Kühlmitteln ihre Dichtfähigkeit behalten.
Für die Realisierung dieser gestiegenen Anforderungen an die Dichtung wurden Schichtwerkstoffe entwickelt, das heißt metallische Bleche werden mit Elastomer beschichtet. Dieser Schichtverbund besitzt durch die Kombination unterschiedlichster physikalischer Eigenschaften ein sehr großes Eigenschaftsspektrum.

Zum einen gewährleistet der Metallträger, im allgemeinen Bleche mit einer Stärke zwischen 0,1 und 1 mm, die mechanische Festigkeit und stellt das formgebende Element dar. Zum anderen ist das eigentliche dichtende Element die Elastomerschicht an einer oder an beiden Oberflächen des Metallträgers aufgebracht.
Jedoch wird nur durch die konstruktive Auslegung der Bauteile bzw. der Dichtungen das vorhandene Eigenschaftsprofil nutzbar. Denn der Metallträger und eine mögliche Sickengeometrie gewährleisten die Vorspannung im Dichtspalt, so daß das Elastomer in die Rauhigkeitsriefen gepreßt wird und somit den dichtenden Formschluß erreicht. Das Metall liefert somit die makroskopische Anpassung an die zu dichtende Geometrie und das Elastomer die Anpassung an die Mikrostruktur der vorhandenen Oberflächen. Gleichzeitig bieten diese Art der Dichtungen eine erhebliche Reduzierung des Montage- und Demontageaufwandes durch die einfache Handhabung bedingt durch den eigensteifen Aufbau der Dichtung. Durch die konstruktiven Merkmale der Dichtung sind geringe notwendige Schraubenkräfte, das Abdichten schmaler Flanschstegbreiten, gute Abdichtung gegen Gase und Fluide und keine Verunreinigung der Einbauumgebung durch Fasern oder Füllstoffe möglich.

Für die Fertigung der Dichtungen können prinzipiell zwei Vorgehensweisen unterschieden werden. Eine Möglichkeit besteht darin, aus dem elastomerbeschichteten Blechen mittels Schneidverfahren und/oder Stanz- und Prägefertigung die Dichtungen herzustellen. Hierzu werden als Ausgangsmaterial für die Dichtungen die metallischen Bleche, meist Coilware, in sogenannte Precoating Verfahren beschichtet. Im Gegensatz dazu, werden beim Aftercoating Verfahren die Dichtungen zunächst durch Schneidverfahren und/oder Stanz- und Prägetechniken hergestellt und anschließend mit Elastomer beschichtet. Beiden Verfahren ist jedoch gemeinsam, daß es sich um ein Beschichtungsverfahren für metallische Grundkörper, Coil oder Dichtungen, zur Herstellung eines Schichtverbundwerkstoffes handelt.

Aus den Dokumenten EP-A 894837 und US-A 4,503,179 sind fluorokautschukhaltige Beschichtungskompositionen und damit beschichtete Gegenstände bekannt. Dabei ist ein notwendiger Bestandteil der Beschichtungskomposition ein (thermoplastisches) Copolymer aus Tetrafluoroethylen, Hexafluoropropylen und einem Perfluorovinylether.
Weiterhin ist aus dem Dokument US-A 4,339,553 eine wäßrige Fluoroelastomer enthaltende Beschichtungskomposition bekannt. Alle darin offenbarten Beschichtungskompositionen enthalten zumindest als Teil des Füllstoffes Ruße.

Weiterhin ist aus dem Dokument GB 2 253 401 A eine Methode für das Aufbringen einer zeitweiligen Schutzschicht auf die Oberfläche von Fertigartikeln durch Aufsprühen einer hochgefüllten Nitrillatex-Gummimischung bekannt, bei der durch das Vorhandensein von Vernetzungsmitteln während der Trocknung eine Vernetzung des carboxilierten Nitrilkautschuks erfolgt.

Die Erfindung hat sich die Aufgabe gestellt, eine wäßrige Elastomerbeschichtungskomposition und mit dieser Elastomerbeschichtungskomposition beschichtete Gegenstände anzugeben, die sehr gute Haftfestigkeiten insbesondere auf metallischen Substraten und eine sehr gute Beständigkeit gegen Kühlwasserangriffe insbesondere im Automobilbau besitzen.

Erfindungsgemäß wird die Aufgabe durch eine wäßrige Elastomerbeschichtungskomposition gelöst, die
a) auf 100 phr bezogen auf die Trockenmasse einen Polymerlatex ausgewählt aus der Gruppe Fluorkautschuk und/oder hydrierter Acrylnitrilbutadienkautschuk,
b) **15 bis 400 phr** mineralischen Füllstoffen wie Silikate/Siliziumoxide, Kieselsäuren, pyrogene Kieselsäuren und/oder Carbonate, Oxide, Hydroxide 2- bis 4-wertiger Metallkationen,
c) **1 bis 6 phr** Vernetzungschemikalien wie aminische, peroxidische, bisphenolische oder schwefelbasierte Vernetzungssysteme,
d) **0 bis 20 phr** gegebenenfalls Dispergatoren und/oder Emulgatoren, organische und/oder anorganische Pigmente, Entschäumer, Alterungsschutzmittel, Wärmesensibilisierungsmittel, Verdicker, Netzmittel, Treibmittel, Schaumstabilisatoren, Koagulantien, Thixotropieagentien, Säurefänger wie MgO, Ca(OH)₂, ZnO, PbO oder Hydrotalcit sowie Haftmitteln **mit Ausnahme von Ruß als Schwarzpigment, welches nur bis 5 phr beträgt und**
e) **0 bis 400 phr** Wasser bevorzugt in demineralisierter Form als Dispersionsmedium der Elastomerbeschichtungskompositionen
**enthält**.

Eine solche Elastomerbeschichtungskomposition ist frei von organischen Lösungsmitteln beziehungsweise enthält organische Lösungsmittel nur in einem sehr geringen Maße als handelsüblichen Bestandteil der angegebenen Zusätze. Die hergestellten elastomerbeschichteten Metalloberflächen zeigen eine sehr hohe physikalische Beständigkeit gegenüber dynamischer und statischer Beanspruchung. Die Medienbeständigkeit der elastomer-beschichteten Oberflächen beträgt eine Vielfaches gegenüber Ruß basierenden Füllsystemen auf Latexbasis und ist höher als die, der auf konventionell hergestellten Lösungsmittel basierenden Materialien.
Im allgemeinen wird der Fluorkautschuk in der Form einer wäßrigen Dispersion eingesetzt. Die wäßrige Dispersion kann durch eine Emulsion des Fluorkautschuks, welche durch Emulsationspolymerisation erhältlich ist, hergestellt sein. Alternativ kann eine wäßrige Dispersion verwendet werden, die durch Suspensions- oder Massenpolymerisation der Ausgangspolymeren hergestellt worden ist. Falls nötig, wird der Fluorkautschuk pulverisiert und mit Hilfe eines Tensides im wäßrigen Medium dispergiert. Der Fluorkautschuk (FKM) ist ein hochfluoriertes, elastisches Co- und / oder Terpolymer, vorzugsweise ein elastisches Co- und/oder Terpolymer, welches Vinylidenfluorid-Monomer-Einheiten enthält und mindestens Monomere eines anderen Fluor enthaltende ethylenisch ungesättigten Monomers enthält. Beispiel anderer Fluor enthaltender ethylenisch ungesättigter Monomere sind Hexafluorpropylen, Pentafluorpropylen, Trifluorethylen, Trifluorchloroethylen, Tetrafluorethylen, Vinylfluorid, Perfluor(methylvinyläther), Perfluor-(ethylvinyläther), Perfluor(propylvinyläther) und weitere. Unter den verschie-denen Fluorkautschuken (FKM) sind besonders Vinylidenfluorid/Hexa-fluoroproplyen Co-Polymer und Vinylidenfluorid/Tetrafluorethylen/Hexa-fluorpropylen-Terpolymer bevorzugt.

Bei den Fluorkautschuk-Latices handelt es sich um aminisch, bisphenolisch oder peroxidisch vernetzbare Typen. Beispiele für die Vernetzungssysteme sind Polyamine, wie aliphatische Polyamine (zum Beispiel Triethylentetramin, Tetraethylenpentamin, Ethylendiamin, N,N-Dicinnamyliden-1,6-hexandiamin, Trimethylendiamin, Hexamethylendiamincarbamat, Ethanolamin, 3,9-bis (3-Aminopropyl)-2,4,8,10-tetraoxa-2-spiro[5.5]undekan und weitere) sowie deren Salze; aromatische Polyamine (wie zum Beispiel Diaminodiphenylmethan, Xylylendiamin, Phenylendiamin, Diaminodiphenylsulfon und weitere) sowie deren Salze; modifizierte Polyamine, Polyamidamine und Polyole wie Phenol-Derivate (zum Beispiel Bisphenol AF, Hydrochinone und weitere); Polyhydroxyverbindungen, die Hydroxydgruppen vom Enoltyp besitzen (zum Beispiel Phenolharze) oder Polythiole, wie Triazinthiol, 1,6-Hexandithiol, 4,4'-Dimercaptodiphenyl, 1,5-Naphtalendithiol, und weitere. Die Vernetzungssysteme schließen Vemetzungshilfen zur Beschleunigung der Vernetzung mit ein. Beispiele für Vernetzungshilfsstoffe beinhalten quaternäre Ammoniumsalze wie DBO-b (Diazabicyclo-undecen-benzylchlorid); tertiäre Amine wie DABCO (Diazabicyclooktan); quaternäre Phosphoniumsalze wie Triphenylphosphin-benzylchlorid und weitere.

Beispiele für peroxidische Vernetzungschemikalien sind:
- 2,5-Dimethyl-2,5-di-tert.-butyl-peroxi-hexan
- 2,5-Dimethyl-2,5-di-tert.-butyl-peroxi-hexin-3
- Di-tert.-butyl-peroxid
- Dicumylperoxid
- α,α'-Di-tert-butyl-peroxi-di-isopropyl-di-isopropyl-benzol
- Dibenzoylperoxid
- 1 ,1-Di-tert.-butyl-peroxi-3,3,5-trimethyl-cydohexan.

Diese werden in Kombination mit sogenannten Coagentien, wie : Allylverbindungen (Triallylisocyanurat, Triallylcyanurat, Triallylphosphat, Triallylcitrat), Schwefel, Methacrylate (1,4-Butandioldimethacrylat, 1,3-Butandioldimethacrylat, Ethylenglykoldimethacrylat), N,N'-m-Phenylendimaleinsäureimide und/oder 1,2-cis-Polybutadien eingesetzt.

Weiterhin können hydrierte Acrylnitrilbutadien-Kautschuke in Verbindung mit peroxidischen oder auf Schwefel basierenden Vernetzungssystemen als Polymerlatex und zugehöriges Vemetzungssystem eingesetzt werden. Als Dispergatoren und / oder Emulgatoren werden anionische Tenside (wie zum Beispiel Laurylsulfatsalze, Perfluoroalkylcarboxylatsalze, Ω-Hydroperfluoroalkycarboxylatsalze und andere), nicht ionische Tenside (wie zum Beispiel Polyethylenglykolderivate, Polyethylenglykol-Polypropylenglykol-Derivate, und andere), Tenside vom Harztyp (zum Beispiel Alkylpolyethylenglykol-äther, Alkylphenyl-polyethylenglykol-äther, Alkylpolyethylenglykol-ester, Ethylenglykol-Propylenglykol-Co-Polymere, Polyethylenglykol-dialkylester und andere) eingesetzt.

Vorteilhafterweise enthält die wäßrige Elastomerbeschichtungskomposition auf 100 phr (parts per hundred parts of rubber) bezogen auf die Trockenmasse der Komponente a), 15 bis 400 phr der Komponente b), 1 bis 6 phr der Komponente c), 0 bis 20 phr je Komponente d) mit Ausnahme von Ruß als Schwarzpigment, welches nur bis 5 phr beträgt sowie e) 0 bis 400 phr Wasser enthält. Die Zusatzmengen der Komponenten b), c), d) und des Wassers werden in Abhängigkeit von der gewünschten Viskosität der Elastomerbeschichtungskomposition und der Ausgangskonzentration des eingesetzten Polymerlatex gewählt. Die Zusammensetzung der Elastomerbeschichtungskomposition erlaubt die Verarbeitung durch Sprühbeschichtung, Streichen, Walzenauftrag, Tauchen, Siebdrucktechnik oder Float- oder Curtain-Coating. Die Schichten der Elastomerbeschichtungskomposition auf dem Werkstück können je nach Auftragsverfahren und eingestellter Viskosität 5 bis 800 µm betragen.

Vorteilhafterweise enthält die Elastomerbeschichtungskomposition zusätzlich einen Faserfüllstoff, wie Aramidfasern, Glasfasern, Kohlenstoffasern oder Kaliumtitanat und / oder ein eingebettes Faservlies. Der Zusatz der genannten faserigen Füllstoffe führt zu einer Verbesserung des Relaxations-Kriechverhaltens.

Besonders bevorzugt ist eine wäßrige Elastomerbeschichtungskomposition, die zumindest als Teil der Komponente b) einen chemisch oberflächenmodifizierten, mineralischen Füllstoff enthält. Durch den Einsatz entsprechend modifizierter Füllstoffe werden die physikalischen Eigenschaften und die Lösungsmittelbeständigkeit der damit erhaltenen Beschichtung verbessert. Vorzugsweise handelt es sich dabei um Silikate des Aluminiums, Kaliums, Natriums, Magnesiums oder Calciums, die mit Silanen und / oder Titanaten oberflächenbehandelt sind.

Vorteilhafterweise wird ein Polymerlatex auf Basis eines fluorhaltigen, elastomeren Co- oder Terpolymer als Komponente a), zumindest als ein Teil der Komponente b) ein durch Aminosilan obernächenmodifizierten, mineralisch Füllstoff, wie entsprechende Wollastonite, Silikate des Aluminiums, Kaliums, Natriums, Magnesiums oder Calciums, ein aminisches Vulkanisationssystem, ein Säurefänger, wie zum Beispiel Zinkoxid und interner Bindungspromotoren auf Basis von Aminosilan oder Metallacrylat-Verbindungen verwendet. Eine wäßrige Elastomerbeschichtungskomposition auf dieser Basis hat zu hervorragenden mechanischen und Lösemittelbeständigkeiten der damit hergestellten Beschichtungen geführt.

Beispiele für die verwendeten Aminosilane sind
- γ-Aminopropyltrimethoxysilan,
- γ- Aminopropyltriethoxysilan,
- γ-(β-Aminoethyl)aminopropyl-trimethoxysilan,
- γ-(β-Aminoethyl)aminopropyl-triethoxysilan,
- γ-(β-Aminoethyl)-Aminopropylmethyldimethoxysilan,
- γ-Ureidopropyltriethoxysilan oder
- γ-(β-(β-Aminoethyl)-aminoethyl)-aminopropyltrimethoxysilan.

Alternativ dazu ist eine Elastomerbeschichtungskomposition, die einen Polymerlatex auf Basis eines fluorhaltigen, elastomeren Co- oder Terpolymer als Komponente a), zumindest als einen Teil der Komponente b) einen Epoxisilan oberflächenmodifizierten, mineralischen Füllstoff, wie entsprechende Wollastonite, Silikate des Aluminiums, Kaliums, Natriums, Magnesiums oder Calciums, einem peroxidischen Vulkanisationssystem, eines Säurefängers wie Zinkoxid und eines internen Bindungspromoter auf der Basis von Epoxisilan oder Metallacrylat-Verbindungen enthält. Auch mit dieser Elastomerbeschichtungskomposition wurden Beschichtungen erzielt, die sehr gute Abriebund Lösemittelbeständigkeiten besitzen.

Besonders bevorzugt ist eine Elastomerbeschichtungskomposition insbesondere für eine Sprühbeschichtung, die eine Viskosität im Bereich von 4 bis 28 s Durchlaufzeit (DIN-Becher 4 mm / 20°C) und eine Tropfzeit von mindestens 300 h Stunden besitzt. Die Elastomerbeschichtungskomposition im angegebenen Viskositätsbereich und mit der angegebenen Topfzeit lassen sich einfach in vorhandene Anlagen integrieren. Weiterhin ist die Verarbeitungsdauer deutlich erhöht.

Vorteilhafterweise führt die Viskosität der Elastomerbeschichtungskomposition insbesondere für ein Walzenauftragsverfahren auf eine Viskosität im Bereich von 150 bis 5000 cps (centi poise second) eingestellt. Durch das Walzenauftragsverfahren kann der Verbrauch an Elastomerbeschichtungskompositionen verringert werden, da kein Overspray eintritt, der erst aufwendig rückgewonnen werden müßte.

Die Erfindung umfaßt weiterhin einen Gegenstand, insbesondere einen flächigen Gegenstand, der mit einer erfindungsgemäßen Elastomerbeschichtungskomposition beschichtet ist. Insbesondere werden Dichtungsoder Dämpfungsteile mit der erfindungsgemäßen Elastomerbeschichtungskomposition beschichtet. Im Bereich des Automobilbaus sind das insbesondere Zylinderkopfdichtungen und Dichtungen in Nebenaggregaten, wie Kompressoren oder Kühler. Vorteilhafterweise wird die Elastomerbeschichtungskomposition auf Gegenstände aufgebracht, die eine chemisch, mechanisch, thermisch und / oder durch Plasmavorbehandlung modifizierte Oberfläche besitzen. Dabei erfolgt die chemische Modifizierung der zu beschichtenden Gegenstände je nach metallischem Substrat basisch, sauer, reduzierend oder oxidierend vorzugsweise in der Gegenwart von Tensiden. Weiterhin kann eine chemische Modifizierung der Oberflächen durch Phosphatieren, Zink-Phospatieren oder Chromatieren erfolgen. Ein thermisches Aktivieren der Oberflächen wird durch eine Behandlung bei erhöhten Temperaturen, zum Beispiel oberhalb 300°C vorgenommen. Die mechanische Aktivierung der Oberfläche erfolgt zum Beispiel durch Bürsten. Insbesondere das Aktivieren mit Plasma oder anderen Verfahren, die durch Einwirkung von Elektronen oder Ionen die Metalloberfläche wie Modifizieren, wie zum Beispiel die Anwendung von Nieder-, Mitteldruck- oder Atmosphärenplasma oder einer Coronaentladung haben sich als vorteilhaft für die Haftfähigkeiten der Elastomerbeschichtungskomposition herausgestellt, die zu hervorragenden Bindungseigenschaften zwischen auf Wasser basierender Elastomerbeschichtungskomposition und Metall führen.

Zur Verbesserung der Haftfähigkeit kann der Gegenstand mit einem Haftmittel vorbeschichtet werden.

Besonders bevorzugt ist die Vorbeschichtung des Gegenstandes mit einem wäßrigen Haftmittel, da damit der Lösemittelgehalt im Beschichtungsverfahren minimiert wird und ein umweltverträgliches Beschichtungsverfahren bereit gestellt wird. Als wäßrige Haftmittel werden insbesondere Haftmittel auf Epoxiphenol-, Aminosilan- oder Schwefelsilanbasis eingesetzt.

Vorteilhafterweise wird der mit der erfindungsgemäßen wäßrigen Elastomerbeschichtungskomposition versehende Gegenstand noch mit einer Anti-Haftbeschichtung versehen. Diese Anti-Haftbeschichtung verbessert die Nutzungseigenschaften der damit hergestellten Dichtungen, insbesondere Zylinderköpfdichtungen, da sie den Austausch eventuell defekt gewordener Dichtungen dadurch vereinfachen, daß am Zylinderkopf oder an dem Motorblock verbleibende Beschichtungsreste minimiert werden. Entsprechende Anti-Haftbeschichtungen enthalten Stoffe wie Graphitharze, Wachse, Polytetrafluorethylen- (PTFE)-Dispersionen oder Molybdändisulfid (MOS₂-Präparationen).

### Beispiele

### Vergleichsbeispiel: Rußgefüllte FKM Latexcompounds

phr (parts per hundert parts of rubber) Rezept bezogen auf Kautschuktrockenmasse

| | |
|---|---|
| FKM Latex | 100 |
| Na- Laurylsulfat | 2-25 |
| Zinkoxid | 5-30 |
| Thermax MT- Ruß | 1-250 |
| Hexamethylendiamincarbamat | 1-6 |
| Wasser | 0-400 |

Vorgelegt wurde in einem 2 I Behälter der FKM Latex und nacheinander Wasser, das Tensid, das Vernetzungssystem (aminisch), Zinkoxyd und der Füllstoff eingerührt, hierzu wurde ein entsprechendes Propellerrührwerk genutzt. Die Elastomerbeschichtungskomposition wurde zur Vermeidung klumpiger Bestandteile durch ein 100 µm Sieb filtriert.

### Beispiel 1: Mineralisch gefüllte FKM Latexcompounds

phr Rezept bezogen auf Kautschuktrockenmasse

| | |
|---|---|
| FKM Latex | 100 |
| Naphtalinsulfonsäure-Förmaldehyd-Kondensationsprodukt | 2-15 |
| Zinkoxid | 3-20 |
| Ca-meta-silikat | 5-400 |
| N,N'-Dicinnamyliden-1,6- hexandiamin | 1-6 |
| Wasser | 0-400 |

Vorgelegt wurde in einem 2 I Behälter der FKM Latex, Wasser und das Tensid. Zu der Tensidlösung wurde anschließend das Vernetzungssystem (aminisch), Zinkoxyd und beide Füllstoffe eingerührt. Hierzu wurde ein entsprechendes hochtouriges Dissolverrrührwerk genutzt. Die Elastomerbeschichtungskomposition wurde zur Vermeidung klumpiger Bestandteilen durch ein 100 µm Netz filtriert.

### Beispiel 2: Mineralisch gefüllter NBR Latexcompound

### phr Rezept bezogen auf Kautschuktrockenmasse

| | |
|---|---|
| NBR Latex | 100 |
| Naphtalinsulfonäure-FormaldehydKondensationsprodukt | 1-15 |
| Zinkoxid | 2-20 |
| Stearinsäure | 0.5-3 |
| Ca-meta-silikat | 10-500 |
| Antioxidant | 1-6 |
| Wachs | 1-10 |
| Talkum | 0-50 |
| Schwefel | 0.3-5 |
| Beschleuniger | 0.3-9 |
| Wasser | 0-400 |

Vorgelegt wurde in einem 2 l Behälter Wasser und das Tensid. Zu der Tensidlösung wurde anschließend das Vernetzungssystem , Zinkoxid, Füllstoffe sowie weitere Zuschlagsstoffe eingerührt. Hierzu wurde ein entsprechendes hochtouriges Dissolverrührwerk genutzt. Die Dispersion wurde anschließend auf einen Dreiwalzenstuhl gebracht und dann mit dem Latex vermischt.

### Beispiel 3: Gefärbte mineralische FKM Latexcompounds

### phr Rezept bezogen auf Kautschuktrockenmasse

| | |
|---|---|
| FKM Latex | 100 |
| Naphtalinsulfonsäure-Formaldehyd-Kondensationsprodukt | 0.5-15 |
| Zinkoxid | 3-20 |
| Gecoatetes Calciummetasilikat | 5-400 |
| Organisches Pigment | 1-20 |
| Titandioxyd | 0-50 |
| N,N'-Dicinnamyliden-1,6 hexandiamin | 1-6 |
| Wasser | 0-400 |

Vorgelegt wurde in einem 2 l Behälter Wasser und das Tensid. Zu der Tensidlösung wurde anschließend das Vernetzungssystem, Zinkoxid und der Füllstoff sowie weitere Zuschlagsstoffe eingerührt. Hierzu wurde ein entsprechendes hochtouriges Dissolverrührwerk genutzt. Die Dispersion wurde anschließend auf einen Dreiwalzenstuhl gebracht und dann mit der Latex vermischt.

### Beispiel 4: Gefärbter mineralisch gefüllter FKM Latexcompound

### phr Rezept bezogen auf Kautschuktrockenmasse

| | |
|---|---|
| FKM Latex | 100 |
| Naphtalinsulfonsäure-Formaldehyd-Kondensationsprodukt | 1-15 |
| Zinkoxyd | 3-20 |
| Gecoatetes Calciummetasilikat | 0-300 |
| Anorganisches Pigment | 1-20 |
| Hexamethylendiamincarbamat | 1-6 |
| Wasser | 0-400 |

Vorgelegt wurde in einem 2 l Behälter Wasser und das Tensid. Zu der Tensidlösung wurde anschließend das Vemetzungssystem , Zinkoxyd und der Füllstoff und/oder das Pigment sowie weitere Zuschlagsstoffe eingerührt. Hierzu wurde ein entsprechendes hochtouriges Dissolverrührwerk genutzt. Die Dispersion wurde anschließend auf einen Dreiwalzenstuhl gebracht und dann mit der Latex vermischt.

### Verfahren der Herstellung der Elastomer Metallverbundteile

Die in den obigen Beispielen erwähnten wasserbasierten Elastomercompounds wurden durch verschiedene Auftragsverfahren auf vorbehandelte Bleche aufgebracht zur Herstellung von Elastomer Metallverburidteilen. Die aufgebrachten Schichtdicken wurden zwischen 5 und 800 µm variiert. Die Metallteilevorbehandlung erfolgte durch Entfernen von Ölresten durch thermische Behandlung oder Lösemittel. Die gereinigten Bleche wurden aktiviert und die Haftmittel (wässrig- oder lösungsmittelbasiert) zum Beispiel durch Sprayauftrag oder Pinselauftrag aufgebracht. Bei den wässrigen Haftmitteln wurden besonders gute Benetzungseigenschaften (niedrige Randwinkel) an durch Oberflächenbehandlungen wie Plasmaaktivieren oder Chromatieren vorbehandelten Metallteilen gefunden.

Beispiele für den Einfluß von oberflächenmodifizierenden/aktivierenden Verfahren auf das Benetzungsverhalten am Beispiel von Edelstahl sind in der nachfolgenden Tabelle dargestellt.

| | |
|---|---|
| Kontaktwinkel (Wasser) < 45° | Kontaktwinkel (Wasser) > 45° |
| Plasma aktiviert | Lösungsmittel entfettet |
| | chromatiert |
| | Alkalisch entfettet |
| | Bürsten |
| | unbehandelt |

Je kleiner der Randwinkel desto besser ist die Benetzung mit wässrigen Medien.

Nach Trocknung der Haftmittel, wobei die Trocknungsprogramme auf die verwendeten Lösungsmittel abgestimmt sein müssen, sind die Bleche zur Beschichtung mit der Elastomerbeschichtungskomposition vorbereitet.
Die Aufbringung der wasserbasierenden Elastomerenbeschichtungskompositionen erfolgt nach den genannten Aufbringungsarten. Für Laborversuche geeignet sind die Aufbringung per Spraycoating oder per Walzenauftrag. Die Viskositäten und die Art der Aufbringung, das heißt, zum Beispiel die Anzahl der Materialauftrage bedingen die spätere Schichtdicke der Elastomerschicht.
Typische Viskositäten der Latexcompounds zum Spritzauftrag liegen im Bereich von 6-22 Sekunden Durchlaufzeit DIN-Becher 4 mm/20 °C (DIN EN 2431).

Die Trocknung der aufgebrachten wässrigen Elastomerbeschichtungskompositionen erfolgte durch ein auf die Schichtdicke abgestimmtes Trockenprogramm, anschließend erfolgte die je nach Kautschukart bei entsprechend hoher Temperatur notwendige Vulkanisation.

### Prüfungen:

Die physikalisch, mechanische Güte der Elastomerschicht in Bezug auf die Verbund haftung wurde durch folgende Verfahren beurteilt:
- Gitterschnitt-Test DIN EN 2409: Haftung in unbelasteten Zustand zu prüfen
- Pencil-hardness-test nach Toyota Werksnorm: dynam. Scherbeansprechung
- Biege-Test nach Toyota Werksnorm: dynamische Dehnungsbelastung
Bei den aufgeführten Prüfungen ist die Charakterisierung der Elastomerhaftung auf dem Trägerblech die wichtigste Kenngröße. Um die Haftfähigkeit zu ermitteln, werden keine absoluten physikalischen Kennwerte ermittelt, sondern vergleichende Untersuchungen durchgeführt. Beim Gitterschnittest wird mit Hilfe einer Schablone ein gitterförmiges Muster in die Oberfläche des Elastomers geschnitten. Dabei ist zu beachten, daß bis zur Oberfläche des Metalls das Elastomer durchtrennt werden muß. Danach wird über das geschnittene Gittermuster ein Klebeband fest fixiert und wider unter einem bestimmten Winkel abgezogen. Bei geringer Haftung zwischen Elastomer und Metall bleiben einzelne Elastomerteile beziehungsweise Elastomerquadrate des eingeschnittenen Gitters am Klebeband haften. Über einen Vergleich mit anderen Materialien kann eine qualitative Aussage für die Haftfähigkeit unter Normalspannung gewonnen werden.
Eine weitere Variante zur Haftungsuntersuchung ist der Pencil Hardness Test. Das Prinzip beruht darauf, daß unter konstantem Anpressdruck abgeflachte Bleichstifte in einem definierten Winkel das Elastomer abtragen ohne dabei die Metalloberfläche zu beschädigen. Die Art und Intensität der Elastomerbeschädigung ist abhängig von der verwendeten Bleistifthärte. Der Wert der Bleistifthärte dient somit als Vergleichsmaßstab für unterschiedliche Elastomermischungen und deren Haftfähigkeit auf der Oberfläche. Es ist ein vergleichendes Maß der Haftfähigkeit unter Scherbeanspruchung.
Um die Haftfähigkeit unter Zugspannung vergleichend zu beschreiben, wird die Elastomerschicht eingeschnitten und exakt über dem Verlauf des Schnittes mit einem Biegeradius um 180° gebogen. Je nach Gestalt der Ablösung an der Schnittkante ist gleichfalls ein qualitatives Merkmal zur Haftfähigkeit.

Weiterhin wurde die optische Qualität visuell beurteilt (Homogenität, Glanz, Oberflächenrauhigkeit). Die für den Einsatz in Medien erforderlichen Tests die zum Beispiel bei Verwendung als Zylinderkopfdichtung (ZKD) oder Nebenaggregatedichtungen für Motoren vorgeschrieben sind, wurden durch Medienlagerungstests in kochendem Wasser (Sandoz Test) sowie durch Lagerung in heißen Kühlflüssigkeitsmedien (Toyota-A) nach Toyota Werksnorm (120°C, 100 Stunden sowie 150°C, 50 Stunden) mit anschließendem Kreuzschnittest durchgeführt.

Weiterhin wurde der elektrische Widerstand (Durchgangswiderstand sowie Oberflächenwiderstand der wasserbasierten Elastomerbeschichtungen nach DIN IEC 93/VDE 0303 Teil 30) getestet, ein sehr hoher spezifischer Widerstand vor allem der mineralisch gefüllten Latexcompounds könnte Vorteile aufgrund verringerter Korrosionsneigungen im Dichtspalt der ZKD von Verbrennungsmotoren haben.

B. Beispiele für die angewandten physikalischen Tests zur Beurteilung der Haftung von wasserbasierten Latexcompounds auf metallischen Oberflächen. Kriterien:

| | | |
|---|---|---|
| Kreuzschnittest | Pencil hardness test | Biegetest |
| < 5% = 1 | Kein Abrieb = 1 | Keine Ablösung = 1 |
| < 50% = 2 | Abtrag im Gummi = 2 | Ablösung = 3 |
| > 50% = 3 | Vollständige Ablösung = 3 | |

Haftfähigkeitsgrade beurteilt anhand gemittelter physikalischer Tests
(Kreuzschnittest, Pencil hardness Test (2B, HB, 2H), Biegetest)

| | **Aminosilan Lösungsmittel-basiert** | **Aminosilan wasser-basiert** | **Direktbindung** | **Durchschnitt** |
|---|---|---|---|---|
| Latexcompound Bsp.3 | 2,1 | 2,0 | 2,9 | 2,2 |
| **Latexcompound Vergl.-Bsp.** | 1,8 | 2,5 | 2,7 | 2,3 |
| | | | | |

## Patentansprüche

1. Wäßrige Elastomerbeschichtungskomposition, die
a) **auf 100 phr bezogen auf die Trockenmasse** einen Polymerlatex **ausgewählt aus der Gruppe** Fluorkautschuk **und/oder** hydrierter Acrylnitrilbutadienkautschuk,
b) **15 bis 400 phr** mineralischen Füllstoffen wie Silikate/Siliziumoxide, Kieselsäuren, pyrogene Kieselsäuren und/oder Carbonate, Oxide, Hydroxide 2- bis 4-wertiger Metallkationen,
c) **1 bis 6 phr** Vernetzungschemikalien wie aminische, peroxidische, bisphenolische oder schwefelbasierte Vernetzungssysteme,
d) **0 bis 20 phr** gegebenenfalls Dispergatoren und/oder Emulgatoren, organische und/oder anorganische Pigmente, Entschäumer, Alterungsschutzmittel, Wärmesensibilisierungsmittel, Verdicker, Netzmittel, Treibmittel, Schaumstabilisatoren, Koagulantien, Thixotropieagentien, Säurefänger wie MgO, Ca(OH)₂, ZnO, PbO oder Hydrotalcit sowie Haftmitteln **mit Ausnahme von Ruß als Schwarzpigment, welches nur bis 5 phr beträgt** und
e) **0 bis 400 phr** Wasser bevorzugt in demineralisierter Form als Dispersionsmedium der Elastomerbeschichtungskompositionen
**enthält.**

2. Elastomerbeschichtungskomposition nach Anspruch 1, **dadurch gekennzeichnet, daß** sie zusätzlich einen faserigen Füllstoff wie Aramidfasern, Glasfasern, Kohlenstoffasern, Asbestfasern oder Kaliumtitanat oder eingebettete Faservliese enthält.

3. Elastomerbeschichtungskomposition nach einem der Ansprüche 1 bis 2, **dadurch gekennzeichnet, daß** sie zumindest als einen Teil der Komponente b) einen chemisch oberflächenmodifizierten, mineralischen Füllstoff enthält.

4. Elastomerbeschichtungskomposition nach einem der Ansprüche 1 bis 3, **dadurch gekennzeichnet, daß** sie einen Polymerlatex auf Basis eines fluorhaltigen, elastomeren Co- oder Terpolymer als Komponente a), zumindest als einen Teil der Komponente b) ein durch Aminosilan oder Titanate oberflächenmodifizierten, mineralischen Füllstoff wie entsprechende Wollastonite, Silikate des Aluminiums, Kaliums, Natriums, Magnesiums oder Kalziums, einem aminischen Vulkanisationssystem, einen Säurefänger wie z.B. Zinkoxid und einen wäßrigen Haftmittel und/oder internen Bindungspromotor auf Basis von Aminosilan oder Metallacrylatverbindungen enthält.

5. Elastomerbeschichtungskomposition nach einem der Ansprüche 1 bis 4, **dadurch gekennzeichnet, daß** sie einen Polymerlatex auf Basis eines fluorhaltigen, elastomeren Co- oder Terpolymer als Komponente a), zumindest als einen Teil der Komponente b) einen Epoxisilan oder Titanate oberflächen modifizierten, mineralischen Füllstoff wie entsprechende Wollastonite, Silikate des Aluminiums, Kaliums, Natriums, Magnesiums oder Kalziums, einem peroxidischen Vulkanisationssystem, einen Säurefänger wie z.B. Zinkoxid und einen wäßrigen und/oder lösemittelhaltigen Haftmittel oder internen Bindungspromotor auf Basis von Epoxisilan oder Metallacrylatverbindungen enthält.

6. Elastomerbeschichtungskomposition, insbesondere für die Sprühbeschichtung, nach einem der Ansprüche 1 bis 5, **dadurch gekennzeichnet, daß** sie eine Viskosität im Bereich von 4 bis 28 Sekunden Durchlaufzeit (DIN-Becher 4 mm/20°C) und eine Topfzeit von mindestens 300 Stunden besitzt.

7. Elastomerbeschichtungskomposition, insbesondere für ein Walzenauftragsverfahren, nach einem der Ansprüche 1 bis 6, **dadurch gekennzeichnet, daß** sie eine Viskosität im Bereich von 50 bis 6000 cps besitzt.

8. Gegenstand, insbesondere flächiger Gegenstand, **dadurch gekennzeichnet, daß** er mit einer Elastomerbeschichtungskomposition nach einem der Ansprüche 1 bis **7** beschichtet ist.

9. Gegenstand nach Anspruch **8**, **dadurch gekennzeichnet, daß** er eine chemische, mechanische, thermische und / oder durch Plasmavorbehandlung modifizierte Oberfläche besitzt.

10. Gegenstand nach Anspruch **8** und/oder **9**, **dadurch gekennzeichnet, daß** er mit einem Haftmittel vorbeschichtet ist.

11. Gegenstand nach einem der Ansprüche **8** bis **10, dadurch gekennzeichnet, daß** er mit einem wäßrigen Haftmittel vorbeschichtet ist.

12. Gegenstand nach einem der Ansprüche **8** bis **11, dadurch gekennzeichnet, daß** er mit einer Antihaftbeschichtung versehen ist.

## Claims

1. An aqueous elastomer coating composition, **which contains**
a) **for every 100 phr, based on the dry weight,** of a polymer latex **selected from the group** of fluororubber and/or hydrogenated acrylonitrile-butadiene rubber,
b) **from 15 to 400 phr** of mineral fillers, such as silicates/silicon oxides, silicas, fumed silicas and/or carbonates, oxides, hydroxides of di- to tetravalent metal cations,
c) **from 1 to 6 phr** of crosslinking chemicals, such as aminic, peroxidic, bisphenolic or sulphur-based crosslinking systems,
d) **from 0 to 20 phr,** if desired, of dispersing agents and/or emulsifiers, organic and/or inorganic pigments, defoamers, antioxidants, heat sensitizers, thickeners, wetting agents, blowing agents, foam stabilizers, coagulants, agents with thixotropic effect, acid scavengers, such as MgO, Ca(OH)₂, ZnO, PbO or hydrotalcite, or else adhesion promoters, **with the exception of carbon black as black pigment, which amounts to only up to 5 phr,** and
e) **from 0 to 400 phr** of water, preferably in demineralized form, as dispersion medium of the elastomer coating compositions.

2. An elastomer coating composition according to claim 1, **characterized in that** it also contains a fibrous filler, such as aramid fibres, glass fibres, carbon fibres, asbestos fibres or potassium titanate, or embedded fibre non-wovens.

3. An elastomer coating composition according to any one of claims 1 to **2**, **characterized in that** it contains, at least as one portion of component b), a chemically surface-modified, mineral filler.

4. An elastomer coating composition according to any one of claims 1 to **3**, **characterized in that** it contains a polymer latex based on a fluorine-containing, elastomeric co- or terpolymer as component a), at least as one portion of component b) a mineral filler surface-modified by aminosilane or by titanates, for example appropriate wollastonites, silicates of aluminium, of potassium, of sodium, of magnesium or of calcium, an aminic vulcanization system, an acid scavenger, e.g. zinc oxide and an aqueous adhesion promoter and/or internal binding promoter based on aminosilane or metal acrylate compounds.

5. An elastomer coating composition according to any one of claims 1 to **4**, **characterized in that** it contains a polymer latex based on a fluorine-containing, elastomeric co- or terpolymer as component a), at least as one portion of component b) a mineral filler surface-modified by epoxysilane or by titanates, for example appropriate wollastonites, silicates of aluminium, of potassium, of sodium, of magnesium or of calcium, a peroxide vulcanization system, an acid scavenger, e.g. zinc oxide and an aqueous and/or solvent-containing adhesion promoter and/or internal binding promoter based on epoxysilane or metal acrylate compounds.

6. An elastomer coating composition, in particular for spray coating, according to any one of claims 1 to **5**, **characterized in that** it has a viscosity in the range from 4 to 28 seconds of flow time (DIN cup 4 mm/20°C) and a pot life of at least 300 hours.

7. An elastomer coating composition, in particular for a roll-application process, according to any one of claims 1 to **6**, **characterized in that** it has a viscosity in the range from 50 to 6000 cps.

8. An article, in particular a sheet-like article, **characterized in that** it has been coated with an elastomer coating composition according to any one of claims 1 to **7**.

9. An article according to claim **8**, **characterized in that** it has a surface which has been modified chemically, mechanically, or thermally and/or via plasma pre-treatment.

10. An article according to claim **8** and/or **9**, **characterized in that** it has been pre-coated with an adhesion promoter.

11. An article according to any one of claims **8** to **10, characterized in that** it has been pre-coated with an aqueous adhesion promoter.

12. An article according to any one of claims **8** to **11, characterized in that** it has been provided with an anti-adhesive coating.

## Revendications

1. Composition aqueuse de revêtement élastomère, qui contient
a) pour 100 phr, sur la base de la masse sèche, d'un latex polymère choisi dans le groupe du caoutchouc fluoré et/ou du caoutchouc acrylonitrile-butadiène hydrogéné,
b) 15 à 400 phr de matières de charge minérales comme des silicates/oxydes de silicium, des acides siliciques, des acides siliciques pyrogènes et/ou des carbonates, des oxydes, des hydroxydes, des cations métalliques de valence 2 à 4,
c) 1 à 6 phr de produits chimiques de réticulation comme des systèmes de réticulation à base d'amine(s), de peroxyde(s), de bisphénol(s) ou à base de soufre,
d) 0 à 20 phr éventuellement de dispersants et/ou d'émulsifiants, de pigments organiques et/ou inorganiques, d'agents anti-mousse, d'agents protégeant contre le vieillissement, d'agents de thermosensibilisation, d'épaississants, d'agents mouillants, d'agents porogènes, de stabilisateurs de mousses, d'agents de coagulation, d'agents thixotropes, de capteurs d'acide tels que MgO, Ca(OH)₂, ZnO, PbO ou l'hydrotalcite, ainsi que des agents d'accrochage, à l'exception du noir de carbone comme pigment noir, qui n'est que de 5 phr, et
e) 0 à 400 phr d'eau, de préférence sous forme déminéralisée en tant que milieu de dispersion des compositions de revêtement élastomère.

2. Composition de revêtement élastomère selon la revendication 1, **caractérisée en ce qu'**elle contient en outre une matière de charge fibreuse comme des fibres d'aramide, des fibres de verre, des fibres de carbone, des fibres d'amiante ou du titanate de potassium et/ou des nappes de fibres incorporées.

3. Composition de revêtement élastomère selon l'une des revendications 1 à 2, **caractérisée en ce qu'**elle contient au moins en tant que partie de la composante b) une matière de charge minérale ayant subi une modification chimique de la surface.

4. Composition de revêtement élastomère selon l'une des revendications 1 à 3, **caractérisée en ce qu'**elle contient un latex polymère à base d'un copolymère ou d'un terpolymère élastomère contenant du fluor en tant que composante a), une matière de charge minérale dont la surface a été modifiée par un aminosilane ou un titanate au moins en tant que partie de la composante b), comme des wallastonites correspondantes, des silicates de l'aluminium, du potassium, du sodium, du magnésium ou du calcium, un système de vulcanisation à base d'amine(s), un capteur d'acide, comme par exemple de l'oxyde de zinc, et un agent d'accrochage aqueux et/ou un promoteur de liaison interne à base d'aminosilane ou de composés d'acrylates métalliques

5. Composition de revêtement élastomère selon l'une des revendications 1 à 4, **caractérisée en ce qu'**elle contient un latex polymère à base d'un copolymère ou d'un terpolymère élastomère contenant du fluor en tant que composante a), une matière de charge minérale dont la surface a été modifiée par un époxysilane ou un titanate au moins en tant que partie de la composante b), comme des wallastonites correspondantes, des silicates de l'aluminium, du potassium, du sodium, du magnésium ou du calcium, un système de vulcanisation à base de peroxyde(s), un capteur d'acide comme l'oxyde de zinc et un agent d'accrochage aqueux et/ou au solvant ou un promoteur de liaison interne à base d'époxysilane ou de composés d'acrylates métalliques.

6. Composition de revêtement élastomère, en particulier pour un revêtement sous la forme de couche(s) par pulvérisation, selon l'une des revendications 1 à 5, **caractérisée en ce qu'**elle possède une viscosité correspondant à la gamme de 4 à 28 s de temps de passage (bécher DIN 4 mm/20 °C) et une durée de vie en pot d'égouttage d'au moins 300 heures.

7. Composition de revêtement élastomère, en particulier pour une application au rouleau, selon l'une des revendications 1 à 6, **caractérisée en ce qu'**elle possède une viscosité dans la gamme de 50 à 6 000 cps.

8. Objet, en particulier objet surfacique, **caractérisé en ce qu'**il est revêtu d'une ou plusieurs couches d'une composition de revêtement élastomère selon l'une des revendications 1 à 7.

9. Objet selon la revendication 8, **caractérisé en ce qu'**il possède une surface modifiée par un pré-traitement chimique, mécanique, thermique et/ou un pré-traitement au plasma.

10. Objet selon la revendication 8 et/ou 9, **caractérisé en ce qu'**il est pré-enduit d'un agent d'accrochage.

11. Objet selon l'une des revendications 8 à 10, **caractérisé en ce qu'**il est pré-enduit d'un agent d'accrochage aqueux.

12. Objet selon l'une des revendications 8 à 11, **caractérisé en ce qu'**il est pourvu d'un revêtement anti-adhésif.
